(19) **Europäisches Patentamt / European Patent Office / Office européen des brevets**

(11) **EP 3 672 424 B1**

(12) # EUROPEAN PATENT SPECIFICATION

(45) Date of publication and mention
of the grant of the patent:
**02.06.2021 Bulletin 2021/22**

(51) Int Cl.:
***A23L 15/00*** *(2016.01)*

(21) Application number: **18773645.9**

(86) International application number:
**PCT/IT2018/050160**

(22) Date of filing: **23.08.2018**

(87) International publication number:
**WO 2019/038794 (28.02.2019 Gazette 2019/09)**

(54) **FOOD PRODUCT AND ITS PROCESS OF PREPARATION**

NAHRUNGSMITTEL UND DESSEN VERFAHREN ZUR HERSTELLUNG

PRODUIT ALIMENTAIRE ET SON PROCÉDÉ DE PRÉPARATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.08.2017 IT 201700095748**

(43) Date of publication of application:
**01.07.2020 Bulletin 2020/27**

(73) Proprietor: **Universita' Degli Studi di Udine
33100 Udine (IT)**

(72) Inventors:
• **ZUCCOLO, Francesca
33043 Cividale Del Friuli (IT)**
• **GOBESSI, Aurora
33010 Tavagnacco (IT)**
• **ROI, Arianna
33010 Tavagnacco (IT)**
• **TITTON, Greta
31033 Castelfranco Veneto (IT)**

(74) Representative: **Petraz, Gilberto Luigi et al
GLP S.r.l.
Viale Europa Unita, 171
33100 Udine (IT)**

(56) References cited:
**US-A- 3 791 285    US-A1- 2013 084 361**

• **Miriam Sorrell: "The Ultimate Vegan Eggs [Vegan, Gluten-Free]", Internet Citation , 23 April 2015 (2015-04-23), XP002779841, Retrieved from the Internet: URL:https://www.onegreenplanet.org/vegan-recipe/the-ultimate-genius-vegan-eggs/ [retrieved on 2018-04-09] cited in the application**
• **Anonymous: "Proper Vegan Hard-Boiled Eggs", Internet Citation , 24 March 2014 (2014-03-24), XP002779842, Retrieved from the Internet: URL:http://elated.co.za/proper-vegan-hard-boiled-eggs/ [retrieved on 2018-04-09] cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

Embodiments described here concern an innovative food product, formulated exclusively with ingredients of natural and non-animal origin, also suitable for vegetarian and/or vegan diets, in particular developed in order to make a substitute for a traditional hard-boiled egg.

In particular, embodiments described here concern a substitute product for a hard-boiled egg and the particular production method, which allows to reproduce accurately and faithfully the appearance, consistency and flavor of a traditional hard-boiled egg, without using ingredients of animal origin.

BACKGROUND OF THE INVENTION

It is known that a growing percentage of the population of the most developed countries follow a vegan diet, consisting solely of ingredients of natural origin, excluding substances of animal origin, including butter, milk and eggs.

Moreover, there are also people who for health reasons cannot eat eggs for example, having problems with hypercholesterolemia or being affected by allergies to some proteins contained in eggs.

In general, it is not at all easy for those who follow a vegan diet to be able to find foods that can replace animal eggs in an acceptable way, both because of their particular consistency due to the combination of egg yolk and white, and also because of their high intake nutritive in terms of proteins and vitamins.

For the reasons mentioned above, attempts have been made to reproduce a combination of plant elements such as to give a finished product with a taste similar to that of the animal egg and with a similar nutritional contribution. For example, there are US patent applications concerning egg substitutes of animal origin. These patent applications concern products both in liquid and solid form (US-A-3,640,732), and also to products in powder form (US-A-2013/0084361).

The patent application US-A-2013/0084361 does not describe the preparation of a finished product similar in consistency with the animal egg and immediately available for food consumption. In fact, this patent application considers only a series of plant ingredients, which can be used instead of an egg of animal origin, in order to prepare vegan foods in which the egg is one of the fundamental components. In particular, document US-A-2013/0084361 provides a yolk-like composition and an albumen-like composition, both having nutritive properties similar to the animal egg. These powdered ingredients that simulate egg yolk and/or egg white can be used in various vegan food recipes. As a consequence, it is not a single product ready for consumption and able to simulate the shape and solid consistency of an animal egg.

With regard to document US-A-3,640,732, it describes the preparation of a substitute egg of the animal egg, but in this case it is a finished product similar to the animal egg exclusively in the shape, but in flavor and nutrients, because for both the phases that constitute egg white and yolk, the ingredients used are represented almost exclusively by oil, water and gelling agent.

Therefore, vegan food substitutes for eggs, currently on the market, are generally supplied as powdered ingredients to be mixed with other ingredients in the process to obtain a given finished food product. In the case of products reproducing the shape and consistency of animal eggs, they are deficient in nutrition and do not have the organoleptic and sensorial properties of eggs.

The Internet publications "The Ultimate Vegan Eggs [Vegan, Gluten-Free], 2015 and "Proper Vegan Hard-Boiled Eggs", 2014, both in the name of Miriam Sorrell - Mouthwatering Vegan, describe the preparation of a vegan hard-boiled egg. These preparation methods provide to make the white and the yolk of the vegan hard-boiled egg separately.

In Sorrell's web document 2015, the egg white is obtained by half a cup of soy milk or other unsweetened vegan milk, half a tablespoon of black salt (Kala Namak), two tablespoons of agar powder. These ingredients are mixed and amalgamated in a mixer, after which the liquid phase is transferred to a pan or frying pan and cooked over a low heat, stirring in the meantime, until the mixture thickens, for about 2 minutes. Then the mixture is transferred into egg molds, which are stored in the fridge for about an hour to solidify and obtain semi-ovoid shapes. Instead, the yolk of the hard-boiled egg is obtained from two tablespoons of mashed or instant powdered potato, a tablespoon of nutritional yeast, a quarter of a tablespoon of turmeric, a quarter of a tablespoon of black salt (Kala Namak), a tablespoon of potato starch, hot water, a tablespoon of vegan margarine or refined pure coconut oil and a tablespoon of sunflower seed or canola oil. This preparation method provides to make the mashed potatoes by adding the margarine and the other ingredients, until obtaining a consistency that recalls that of the yolk of the hard-boiled egg. Afterward, the mixture is stored in the freezer for 15-20 minutes, then removed and used to make, manually, balls of similar shape and size to the yolk of a hard-boiled egg. Once the egg whites and yolks have been made separately, it is possible to obtain half boiled "eggs" or whole boiled "eggs". In the first case, a small part of the surface of the semi-ovoid egg white is removed with a spoon and, in the cavity thus obtained, the egg yolk made as above is deposited, possibly leveling it with a flat knife. It is stored in the fridge for a few hours, after which it can be served. The whole vegan "egg" is, instead, obtained by shaping two semi-ovoid egg whites in the same way, to obtain two cavities for the yolk by means of a spoon. A ball of yolk is put in one of the two cavities, after which the other part of the semi-ovoid egg white is closed, making the yolk fit with the second cavity as well.

It should be noted here, however, that the use of refined coconut oil inserted as such in the Sorrell formulation 2015 is disadvantageous because it generates a phase separation since a stable emulsion is not created by using an emulsifier. This can result in a visible loss of oil from the product, with obvious deficiencies of the final product for industrial, commercial and consumption purposes. Moreover, coconut oil contains a large quantity of saturated fats, recognized as fats that are harmful to health.

Furthermore, in the Sorrell recipe 2015, the use of turmeric is provided in the phase that simulates the yolk, to give the characteristic yellow color of the animal egg. However, this spice is disadvantageous because it is a source of defects in the final product when inserted into the formulation to obtain the type of final food product in question. In fact, turmeric generates color migrations from the yolk-like phase to the albumen-like phase, especially because it is combined with coconut oil, which as explained above is not correctly emulsified. It follows that an interruption of the cold chain and a thermal increase, for example because the product is kept at room temperature for some time, cause the coconut oil to melt and consequently the color of the turmeric to migrate, with the creation of a yellow halo in the albumen phase, which certainly impoverishes the appearance and attractiveness of the final product, also from the sensorial point of view.

In the Sorrell 2014 web document, the yolk of the hard-boiled egg is made using the same ingredients as Sorrell 2015, with the exception that neither sunflower seed nor canola oil or potato starch is used. Instead, three quarters of egg substitute is used. The procedure for preparing the egg yolks is similar to Sorrell 2015. The egg white, on the other hand, is made with silken tofu which, as in Sorrell 2015 is cut, deposited and lightly pressed into semi-ovoid egg molds. In this case too, an oval cavity is created in the egg white by means of a spoon, in which to place the ball of egg-yolk. The use of tofu in the phase that simulates egg white, however, is disadvantageous for the homogeneity of the product, since even if it is blended, it can have granules and lack homogeneity, and therefore the mixture to be gelled would not be very homogeneous. Moreover, since tofu is whitish tending to gray in color, it would not give the suitable coloring that characterizes the white of a hard-boiled egg: a color of simulated albumen which tends to gray would not be well accepted by the consumer and could generate an attitude of mistrust toward the product, also from the sensorial point of view.

Ultimately, both the Sorrell 2014 and Sorrell 2015 recipes are not suitable to make an industrially produced product and to perfect a stable food product, with a prolonged shelf-life and which can have commercial, consumer and distribution success.

Document US-A-2013/084361 describes compositions of simulated vegan egg and methods to prepare them. The simulated egg yolk includes water, nutritional yeast flakes, alginate sodium as a thickening agent, black salt and beta carotene as a coloring agent. The simulated egg white includes proteins from legumes, nutritional yeast flakes, black salt, and konjac powder as a thickening agent. The two phases, simulated egg white and yolk, are combined by a binding agent. This document does not teach to make a substitute hard-boiled egg product. Moreover, it should be noted that the use of yeast flakes is disadvantageous in terms of smell and taste, as it contributes to giving a taste similar to cheese, covering the real taste of the egg.

Document US-A-3,791,285 describes an apparatus and a method to form and cook non-vegan products, based on egg and, for example, meat or cheese. The apparatus comprises two hinged ovoid half-shells. A first half-shell is supported by a pedestal and comprises a central protruding peg inside, while the second half-shell acts as a closing lid and is provided with an upper cap. A ball of food product, for example meat, cheese or other, is firmly skewered onto the peg in the first half-shell, after which the second half-shell is closed on the first half-shell. The cap of the first half-shell is then opened to pour into it egg white previously separated from the yolk of the fresh egg. The cap is then closed and the appliance is cooked in a bain-marie. At the end of cooking, the peg is removed from the bottom and, after opening the second half-shell, it is possible to extract the cooked final product.

In the light of the limitations and shortcomings mentioned above, the need is felt to make available a substitute product of a boiled egg of animal origin for all consumers who follow a vegan diet and for those who have problems with hypercholesterolemia or allergy to some proteins present in the animal egg.

The Applicant has surprisingly found a method such as to produce a food product replacing a traditional hard-boiled egg, able to effectively reproduce the typical ovoid shape and also the taste of the traditional hard-boiled egg, without using any ingredients of animal origin.

A first purpose of the present invention is to provide a food product with high protein value and able to simulate the chemical, physical and sensorial characteristics of the corresponding traditional hard-boiled egg, without using any ingredients of animal origin.

Another purpose of the invention is to make available to consumers a food product ready for direct and gastronomically "flexible" consumption, that is, such that it can be combined without inconvenience to different types of food, such as for example salads, sauces, etc.

Another purpose of the present invention is to perfect a standardized and industrially reproducible method for the production of the product to replace a traditional hard-boiled egg, advantageously without using ingredients of animal origin, which has a prolonged shelf-life and maintains its sensorial properties over time.

The Applicant has devised, tested and embodied the present invention to overcome the shortcomings of the state of the art and to obtain these and other purposes and advantages.

SUMMARY OF THE INVENTION

The present invention is set forth and characterized in the independent claims, while the dependent claims describe other characteristics of the invention or variants to the main inventive idea.

In accordance with the above purposes, embodiments described here concern a food product to substitute a traditional hard-boiled egg consisting of the following phases:

an albumen-like phase (A) comprising:

- a powdered component chosen from a powdered soya-based drink, a powdered oats-based drink, a powdered rice-based drink;
- water;
- a plant gelling agent;
- calcium carbonate $CaCO_3$;

a yolk-like phase (B) comprising:

- from 10% to 50% in weight of an oil in water emulsion;
- from 20% to 80% in weight of water;
- from 5% to 50% in weight of a legume flour or cereal flour;
- from 1.0% to 10% in weight of a food grade salt containing sulfates and/or sulfides;
- from 0.1% to 10% in weight of a plant gelling agent;

wherein the yolk-like phase occupies the central portion of the food product, while the albumen-like phase constitutes the external covering of said food product.

Other embodiments, which can be combined with all the embodiments described here, concern a food product to substitute a traditional hard-boiled egg consisting of the following phases:

an albumen-like phase (A) comprising:

- a powdered component chosen from a powdered soya-based drink, a powdered oats-based drink, a drink based on powdered rice and/or powdered vegetable starch, in particular rice starch or potato starch;
- water;
- a plant gelling agent;
- calcium carbonate;

a yolk-like phase (B) comprising:

- water;
- vegetable oil;
- plant protein source, in flour or powder, with a high protein content;
- food grade salt containing sulfates and/or sulfides;
- plant gelling agent.

In the present description the terms "yolk or yolk-like phase" and "albumen or albumen-like phase" indicate physically distinct parts of a heterogeneous system (hard-boiled egg substitute), delimited by separation surfaces and characterized by homogeneity in their chemical composition and state of aggregation.

In particular, "albumen-like phase" means a phase of chemical-physical consistency and a similar taste to the albumen of animal eggs, while the "yolk-like phase" indicates a phase of chemical-physical consistency and taste similar to the yolk of animal eggs.

The embodiments described above comprising the distinct phases of the albumen-like (A) and the yolk-like (B) allow to produce a finished product, a substitute for a traditional hard-boiled egg, understood as a shelled hard-boiled egg, with excellent resemblance as regards flavor, physical consistency and sensorial properties. By hard-boiled egg we mean an egg cooked or boiled with its shell in boiling water which can be eaten after removing the shell. Consequently, the food product in question is an excellent substitute for a hard-boiled egg after removal of the shell. In possible embodiments, which can be combined with all the embodiments described here, the albumen-like phase (A) can include from 50% to 95% in weight of water.

After extensive experimental research, the Applicant has identified advantageous components for the preparation of the albumen-like component phase (A) and of the yolk-like component phase (B) according to the present invention.

In accordance with some embodiments, both in the preparation of the albumen-like phase (A) and in the yolk-like phase (B) one or more of the following plant substances can be used as gelling agents:

- starches, such as for example rice starch, corn starch, tapioca starch, wheat starch, arrowroot, potato starch;
- vegetable gums, available on the market in the form of very fine powders, such as guar gum, xanthan gum, tara gum, konjac gum;
- agar-agar, pectin, soy lecithin, carrageenans.

Among these, a gelling agent which can be used in possible embodiments is agar-agar, which is a polysaccharide obtained from the processing of red algae belonging to different genera. The gel produced by this substance has a mild taste and is rich in minerals. It does not alter the taste of the food with which it is mixed and for this reason it is also used in the preparation of gelatin for desserts and savory dishes. Agar-agar generates a more solid gel than gelatin of animal origin, traditionally used in the preparation of food dishes. This gelling agent is absorbed minimally by the organism, so it does not provide any calories.

It is clear that the gelling agent used in the albumen-like phase could be the same as the gelling agent used in the yolk-like phase, or different. Moreover, it is also possible to use combinations of gelling agents.

As reported above, in accordance with some embodiments, the ingredients of the albumen-like phase (A) can be water, a plant gelling agent, calcium carbonate and a powdered component chosen between a powdered soya-based drink, a powdered oats-based drink or a powdered rice-based drink. Preferably a powdered soya-based drink is used. In possible example embodiments, the weight ratio between a powdered soya-based drink and water is between 1:1.5 and 1:100. There is nothing to prevent the drink from being supplied in powder form and then reconstituted in water, or supplied directly in liquid form.

In possible embodiments, which can be combined with all the embodiments described here, the gelling agent can be comprised in the albumen-like phase (A) between 0.1 and 10%, in particular from 1% to 8% in weight with respect to the total of the albumen-like phase (A).

As a gelling agent, it is possible, for example, to preferably use agar-agar, for example in a weight quantity comprised between 0% and 10% with respect to the total of the albumen-like phase (A). A possible example goes from 0.1% to 10%. Another possible example goes from 0% to 4%. A further possible example goes from 0.1% to 4%. Moreover, or alternatively, in the albumen-like phase (A) carrageenans can be used as gelling agent, for example from 1% to 4% in weight of the albumen-like phase (A). In the albumen-like phase (A) it is also possible to use a combination of agar-agar and carrageenans, for example in the above-mentioned weight ranges.

In the yolk-like phase (B) as well, as described above, a gelling agent is present, which for example can range from 0.1 to 10%. This gelling agent can be agar-agar. A possible implementation can provide the gelling agent in particular from 0.5% to 3% with respect to the weight of the yolk-like phase (B).

In possible embodiments, which can be combined with all the embodiments described here, the weight quantity of calcium carbonate in the albumen-like phase (A) is preferably comprised between 0.1 and 10%, in particular from 1% to 5%, with respect to the total of the albumen-like phase (A).

In possible embodiments, which can be combined with all the embodiments described here, the albumen-like phase (A) can also include starch, such as cereal starch, for example rice, and/or potato starch. In possible implementations, the starch present in the albumen-like phase (A) can range from 2% to 10% in weight.

In possible embodiments, which can be combined with all the embodiments described here, in the albumen-like phase (A) there can also be a flavoring agent, from 0% to 2% in weight with respect to the total of the albumen-like phase (A).

Among the components necessary for the preparation of the yolk-like phase (B) there is an oil emulsion in water, in particular an oil emulsion in water in liquid form, or in solid and suitably melted form.

In particular, the oil in water emulsion can include water and one or more vegetable oils.

In possible embodiments, which can be combined with all the embodiments described here, the total water content present in the yolk-like phase (B), supplied in the oil emulsion in water or not, can be comprised between 25% and 50% in weight with respect to the total of the yolk-like phase (B).

In possible embodiments, which can be combined with all the embodiments described here, the overall oil content present in the yolk-like phase (B) can be comprised between 10% and 25% in weight with respect to the total of the yolk-like phase (B).

In some embodiments, which can be combined with all the embodiments described here, the vegetable oil can be a vegetable oil for food uses, that is, a vegetable fat for food uses made, for example, from nuts and oily seeds or from other parts of a plant, like flowering tops, flowers, leaves, fruit, roots and rhizomes. In possible embodiments, the vegetable oil can be chosen from a group that comprises: hemp seed oil, safflower oil, canola oil, linseed oil, macadamia oil, walnut oil, argan oil, olive oil, palm oil, bi-fractionated palm oil, refined palm oil, castor oil, rice oil, peanut oil, sunflower seed oil, corn oil, sesame seed oil, oil of soya beans, grapeseed oil, or mixtures of two or more of these.

Preferably, vegetable oils rich in unsaturated fats are used, which are beneficial to health.

In possible example embodiments, the vegetable oil can be chosen, for example, from: sunflower seed oil, peanut oil, linseed oil. Among these, sunflower seed oil and peanut oil are preferred, as they best tolerate the high temperature.

In any case, the emulsion of the yolk-like phase (B) is without coconut oil, avoiding the problems connected to the instability of the emulsion connected to this type of oil.

In other embodiments, the oil in water emulsion can also include one or more plant flours, in particular provided in the form of soft flours. In the present description, by the term "flour" we mean a product obtained by grinding grain kernels, as well as other dried fruits or seeds, for example from legumes or other suitable vegetables. The one or more plant flours present in the emulsion can represent all or part of the plant, legume or cereal flours, supplied as a plant protein source with a high protein content in the same yolk-like phase (B). In possible embodiments, for the preparation of the oil in water emulsion different types of flour or powder can be used, such as for example: rice flour or powder, soy flour or powder, chickpea flour or powder, hemp flour or powder, oat flour or powder or combinations thereof. For example, rice flour can be used.

For example, both the water and the flour or powder can be supplied in combination by means of a drink based on water and a plant from which the flour or powder is derived, such as for example a rice-based drink, a soya-based drink, an oat-based drink or suchlike.

A preferred example of vegetable oil rich in unsaturated fats used in the yolk-like phase (B) is, in particular, sunflower seed oil, which, in synergy with the other components of the emulsion, increases its stability, avoiding an undesirable phase separation. Sunflower seed oil is particularly advantageous when combined, in the emulsion, with soft rice flour. The Applicant has found that in the formulation of the yolk-like phase (B), the emulsion used is particularly stable, without separation of the oil phase, when for example this emulsion is formed from water, sunflower seed oil, powdered drink supplied as an soft rice flour and a minimal addition of emulsifying agent (for example monoglycerides).

In accordance with embodiments described here, in the yolk-like phase (B), the legume or cereal flour is supplied to act as plant flour sources of proteins, that is, with a high protein content. In general, therefore, in the yolk-like phase (B) there is a plant protein source, advantageously in flour or powder form, with a high protein content, which can be a plant flour with a high protein content, in particular from 20% to 95%%, more particularly from 30% to 95%, even more particularly from 40% to 95%. In particular a possible example of a plant protein source with a high protein content can be a protein isolate with a content of 60% to 95% of proteins.

In particular, in some embodiments, which can be combined with all the embodiments described here, the chickpea flour can be present from 15% to 40% in the yolk-like phase (B). Moreover, in the yolk-like phase (B) there can be a plant protein source with a high protein content, from 0% to 30% in weight. The presence in the yolk-like phase (B) of chickpea flour and another plant protein source with a high protein content in combination is also possible, in the weight percentage ranges indicated above.

In other embodiments, the oil in water emulsion can also include one or more emulsifying agents.

Moreover, different types of emulsifying agents can be used, such as: mono and diglycerides of fatty acids, soy lecithin, sunflower lecithin, or combinations thereof.

The emulsion used in the yolk-like phase (B) which includes oil, water and preferably the above plant flours and emulsifying agents, is very stable and, in particular, allows the oil to stabilize over time which, therefore, does not separate from the product, preserving its sensorial properties.

In addition to these ingredients in the emulsion, other components present in a lower percentage to improve the stability and taste of the formulation (vinegar, lemon juice, mustard, salt and spices) can be added.

As indicated above, the component based on legume or cereal flours to be used to create the yolk-like phase (B) has the main function of conferring a considerable protein contribution to phase (B). As legume or cereal flours it is possible to use lupin flour, chickpea flour, bean flour, lentil flour, cereal flour or germinated legumes and mixtures thereof. In particular, the use of lupin flour has proved to be particularly advantageous, due both to its high protein content and also to its natural yellow color that allows to avoid other dyes, for example tomato and "yellow" food dyes, to give the right color to the yolk-like phase (B) component. Advantageously, the formulation of the yolk-like phase (B) has no turmeric, avoiding the defects deriving from the use of this spice in relation to the coloring.

According to some embodiments, the yolk-like phase (B) comprises a food grade salt containing sulfates and/or sulfides, thus functioning as a flavoring agent. For example, Indian Kala Namak salt can be used, also called "Indian black salt". It is obtained from a typical Indian mineral and has a very characteristic sulfur taste; moreover it is rich in iron and unlike common salt it does not increase sodium content in the blood. Indian salt can be found on the market both pure and with added herbs and spices.

In possible embodiments, which can be combined with all the embodiments described here, the food grade salt containing sulfates and/or sulfides present in the yolk-like phase (B), which functions as a flavoring agent, can be comprised in particular between 1% and 4% in weight.

Another component that can be used in the preparation of the yolk-like phase (B) is tomato, or a tomato-based compound, preferably in the form of tomato paste. The latter can advantageously have the dual function of conferring on phase (B) the desired coloring, advantageously to reproduce a coloring similar to the yellow of natural egg yolk, as well as contributing to improving the flavor of the hard-boiled egg substitute, object of the present patent application. In some embodiments, tomato can be present from 0% to 40% in weight of tomato in the yolk-like phase (B). In some embodiments in which tomato is present, it can vary from 0.1% to 40% in weight, in particular from 5% to 35%, more particularly from 10% to 30%, still more particularly from 15% % to 25% in weight. Possible examples are 15%, 16%, 17%, 18%, 19%, 20% in weight.

In some embodiments, the yolk-like phase (B) can also comprise a "yellow" food dye, in particular "egg yellow", more specifically "yolk yellow". This food dye can be present from 0% to 1% in weight in the yolk-like phase (B). In the case where tomato is not present, or in the case where the dye is added to formulations in which tomato is present, the dye can be present from 0% to 2%, in particular from 0.1% to 2%, more in particular from 0.1% to 1% in weight, for example 0.1%, 0.2%, 0.3%, 0.4%, 0.5%, 0.6%, 0.7%, 0.8%, 0.9%, 1.0% in weight or an appropriate range chosen between these values, for example from 0.1% to 0.5% in weight. Advantageously, the yellow food dye can contribute to the yolk yellow coloring of the yolk-like phase (B) together with the presence of tomato (see the yolk-like phase (B), example 2 described below).

In the case where neither tomato nor the "yellow" food dye is present, the reproduction of the "yolk yellow" color of the yolk-like phase (B) can be obtained by using lupin flour (see yolk-like phase (B) example 1 described below).

In order to make a hard-boiled egg substitute food product according to the invention and having the yolk-like phase (B) in a central position and the albumen-like phase (A) as the external covering of the food product it is necessary to carry out a specific and particular method in order to cover phase (B) proportionately with phase (A).

Still other embodiments concern a method to prepare a food product substituting a traditional hard-boiled egg, said method comprising:

- pouring a melted mixture having a composition of a yolk-like phase (B) into spherical shaped molds in order to obtain yolk-like solid compounds, and subsequent reduction in temperature, until the whole mass is completely cooled and solidified;
- pouring a further melted mixture having a composition of an albumen-like phase (A) into a mold having cavities;
- subsequently cooling the mold into which the composition of the albumen-like phase (A) has been poured to a temperature comprised between 25°C and 60°C, preferably between 30°C and 50°C, even more preferably between 35°C and 45°C, in order to obtain the albumen-like phase (A) in a partly melted form;
- inserting the cooled and solidified yolk-like phase (B) into the central portion of the cavities containing the albumen-like phase (A) in a partly melted form;
- a further step of pouring the albumen-like phase (A) through the holes of another mold in order to obtain the upper portion of the food product to substitute a hard-boiled egg, so that the yolk-like phase (B) occupies the central portion of the food product, while the albumen-like phase (A) constitutes the external covering of the food product; wherein the albumen-like phase (A) comprises:
- a powder component chosen from a powdered soya drink, a powdered oat drink, a powdered rice drink;
- water;
- a plant gelling agent;
- calcium carbonate;

in which the yolk-like phase (B) comprises:

- from 10% to 50% in weight of an oil emulsion in water;
- from 20% to 80% in weight of water;
- from 5% to 50% in weight of a legume or cereal flour;
- 1.0% to 10% in weight of a food grade salt ("food grade") containing sulfates and/or sulfides;
- from 0.1% to 10% in weight of a plant gelling agent.

Still further embodiments concern a method to prepare a food product substituting a hard-boiled egg according to the present description. According to an embodiment, the method comprises:

- pouring a melted mixture having a composition of a yolk-like phase (B) into spherical shaped molds (13) in order to obtain yolk-like solid compounds, and subsequent reduction in temperature, until the whole mass is completely cooled and solidified;
- pouring a further melted mixture having a composition of an albumen-like phase (A) into a mold (10) having cavities (11);
- subsequently cooling said mold (10) into which the composition of the albumen-like phase (A) has been poured to a temperature comprised between 25°C and 60°C, preferably between 30°C and 50°C, even more preferably between 35°C and 45°C, in order to obtain said albumen-like phase (A) in a partly melted form;

- inserting the cooled and solidified yolk-like phase (B) into the central portion of said cavities (11) containing said albumen-like phase (A) in a partly melted form;
- further step of pouring said albumen-like phase (A) through the holes (18) of a further mold (16) in order to obtain the upper portion of said food product to substitute a hard-boiled egg, so that the yolk-like phase (B) occupies the central portion of said food product, while the albumen-like phase (A) constitutes the external covering of the food product;

wherein the albumen-like phase (A) comprises:

- a powdered component chosen between a powdered soya-based drink, a powdered oat-based drink, a drink based on powdered rice and/or a powdered plant starch, in particular a cereal starch, such as rice starch, or potato starch;
- water;
- a plant gelling agent;
- calcium carbonate;

in which the yolk-like phase (B) comprises:

- water;
- vegetable oil;
- plant protein source, in flour or powder, with a high protein content;
- food grade salt containing sulfates and/or sulfides;
- plant gelling agent.

It should be noted that, in some embodiments, both the albumen-like phase (A) and the yolk-like phase (B), before the respective pouring steps in the mold, are obtained by mixing the respective components and subjecting the mixtures thus obtained to heating and cooking to obtain the corresponding melted mixtures.

The embodiments of the method described here allow to produce a food product substituting a traditional hard-boiled egg, starting from the specific recipes reported above relating to an albumin-like phase (A) and to a yolk-like phase (B).

In this way, a food product of high protein value is obtained, able to simulate the chemical, physical and sensorial characteristics of the corresponding traditional hard-boiled egg, without using any ingredients of animal origin.

Another considerable advantage of the present invention is that it makes available to consumers a solid food product ready for direct consumption ("ready to eat"), and gastronomically "flexible", that is, such that it can be combined without disadvantages with different types of foods, such as salad, sauces, etc.

Overall, the choice of ingredients and production steps to obtain the product in accordance with the embodiments described here implies a complex synergy between the ingredients themselves, the operating steps and the operating conditions and parameters in relation to which the operating steps are carried out. This implies precise measurements of the viscosity, texture, consistency and rheological behavior of the albumen-like phase (A) and of the yolk-like phase (B) to obtain both the exact "floating" effect of the yolk-like phase (B) in the albumen-like phase (A), and also the correct and adequate sensorial properties of the final food product. The ingredients and the production steps to obtain the product according to embodiments of the invention allow to obtain the effect that the albumen-like phase (A) supports the weight of the yolk-like phase (B) which is introduced before the further pouring step, and moreover that the external surface of the final food product, consisting of the part of albumen-like phase (A) which is introduced into the mold during the further pouring phase, is uniform and cohesive in a continuous manner, without junction lines, interruptions or other.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

BRIEF DESCRIPTION OF THE DRAWINGS

These and other characteristics of the present invention will become apparent from the following description of some embodiments, given as a non-restrictive example with reference to the attached drawings wherein:

- figs. 1a-1c show the pouring of the albumen-like phase (A) into a first mold provided with circular shaped cavities;
- figs. 2a-2e show the pouring of the yolk-like phase (B) into spherical shaped molds;
- figs. 3a and 3b show the insertions step of the solid compounds obtained from the pouring of figs. 2a-2e into the central portion of each cavity containing the albumen-like phase (A);
- figs. 3c and 3d finally show the steps of further pouring of the albumen-like phase (A) using semi-oval molds, which overlap the cavities of the first mold.

To facilitate comprehension, the same reference numbers have been used, where possible, to identify identical common elements in the drawings. It is understood that elements and characteristics of one embodiment can conveniently be incorporated into other embodiments without further clarifications.

DETAILED DESCRIPTION OF SOME EMBODIMENTS

We will now refer in detail to the various embodiments of the present invention, of which one or more examples are shown in the attached drawings. Each example is supplied by way of illustration of the invention and shall not be understood as a limitation thereof.

Unless otherwise defined, all the technical and scientific terms used here and hereafter have the same meaning as commonly understood by a person with ordinary experience in the field of the art to which the present invention belongs. Even if methods and materials similar or equivalent to those described here can be used in practice and in the trials of the present invention, the methods and materials are described hereafter as an example. In the event of conflict, the present application shall prevail, including its definitions. The materials, methods and examples have a purely illustrative purpose and shall not be understood restrictively.

All the percentages and ratios reported here shall be understood to refer to the weight of the total composition (w/w), unless otherwise indicated.

All the percentage intervals reported here are supplied with the proviso that the sum with respect to the overall composition is 100%, unless otherwise indicated.

All the intervals reported here shall be understood to include the extremes, including those that report an interval "between" two values, unless otherwise indicated.

The present description also includes the intervals that derive from uniting or overlapping two or more intervals described, unless otherwise indicated.

The present description also includes the intervals that can derive from the combination of two or more values taken at different points, unless otherwise indicated.

In accordance with embodiments described here, an innovative food product is provided, replacing a hard-boiled egg, understood as a shelled hard-boiled egg, and a corresponding production method, with ingredients of natural and non-animal origin, that is, without ingredients of animal origin, therefore also suitable for vegetarian and/or vegan diets.

The food product according to some embodiments described here comprises an albumen-like phase (A) and a yolk-like phase (B) inside it.

In some embodiments, which can be combined with all the embodiments described here, the ingredients of the albumen-like phase (A) can be, for example, water, a plant gelling agent or mixture of several plant gelling agents, calcium carbonate and a powdered component chosen from a powdered soya-based drink, a powdered oat-based drink and a powdered rice-based drink, or alternatively, plant starch, such as cereal starch, for example rice, or potato starch. These drinks or powdered preparations are advantageously supplied in the form of soft flour, which allows to have a suitable homogeneity of the dough and therefore a gelling without lumps and therefore the desired consistency of the gel in the albumen-like phase (A). Furthermore, this type of powder or flour contributes to providing the correct white color to the albumen-like phase (A).

Advantageously, moreover, the presence of calcium carbonate in the albumen-like phase (A) has the advantageous effect of acting as a white pigment, intensifying the white color, thus providing the correct and desired white coloring to the albumen-like phase (A). The Applicant has also found a synergic effect in providing the desired white coloring to the albumen-like phase (A) between calcium carbonate and the above drinks or powdered preparations advantageously supplied in the form of soft flour.

Possibly, a flavoring agent can also be present in the albumen-like phase (A).

In some embodiments, combinable with all the embodiments described here, the albumen-like phase (A) comprises:

- a powdered component chosen from a powdered soya-based drink, a powdered oat-based drink, a powdered rice-based drink;
- water;
- a plant gelling agent;
- calcium carbonate from 0.1% to 10% in weight.

In other embodiments, combinable with all the embodiments described here, the albumen-like phase (A) comprises:

- plant starch, in particular from rice, from 2% to 10% in weight;
- water from 50% to 95% in weight;
- one or more plant gelling agents, of which agar-agar from 0% to 4% in weight and carrageenans from 1% to 4% in weight;
- calcium carbonate from 1% to 5% in weight;
- a flavoring agent from 0% to 2% in weight.

In some embodiments, which can be combined with all the embodiments described here, the ingredients of the yolk-like phase (B) can be, for example, legume or cereal flours and/or other plant protein source, for example in the form of flour, with a high protein content, a plant gelling agent, a food grade salt containing sulfates and/or sulfides, a possible dye, water and oil, in particular plant oil.

In some embodiments, combinable with all the embodiments described here, the yolk-like phase (B) comprises:

- from 10% to 50% in weight of an oil in water emulsion;
- from 20% to 80% in weight of water;
- from 5% to 50% in weight of a legume or cereal flour;
- from 1.0% to 10% in weight of a food grade salt containing sulfates and/or sulfides;
- from 0.1% to 10% in weight of a plant gelling agent.

In other embodiments, combinable with all the embodiments described here, the yolk-like phase (B) comprises:

- from 10% to 25% in weight of oil, in particular plant oil;
- from 25% to 50% in weight of water;
- plant protein source, in flour or powder, high in protein;
- from 1% to 4% in weight of a food grade salt containing sulfates and/or sulfides;
- from 0.5% to 3% in weight of agar-agar as a plant gelling agent;
- dye from 0% to 2% in weight.

For example, the plant protein source in flour or powder with a high protein content can include:

- from 15% to 40% in weight of chickpea flour;
- from 0% to 30% in weight of another plant protein source, in flour or powder form, with a high protein content, for example in the form of plant flour with a high protein content.

These ingredients are mixed together in a mixer so as to obtain a homogeneous mixture, which is subjected to heating and then cooked, up to a temperature comprised between 75°C and 95°C, so as to obtain a melted mixture of the albumen-like phase(A).

In possible embodiments, which can be combined with all the embodiments described here, the albumen-like phase (A) and/or the yolk-like phase (B) have no tofu or foods similar to tofu, that is, foods derived from coagulation of soy milk.

The absence of tofu in the formulation for the albumen-like phase (A) has the advantage of obtaining a homogeneous product, free of granules and which therefore gels in an optimal manner. The absence of tofu also allows to obtain the desired white coloring, advantageously intensified also by the use of calcium carbonate, while with the use of tofu, the albumen-like phase (A) would tend to be gray.

The absence of tofu, in practice replaced by legume or cereal flours and/or other plant protein source, for example in the form of flour, with a high protein content, in the formulation for the yolk-like phase (B) has the advantage that the value of water activity (or free water, $a_w$) is lower than in the case where tofu is used, and consequently the product has greater stability, preservability and prolonged shelf-life.

Advantageously, moreover, the presence of legume or cereal flours and/or other plant protein source, for example in the form of flour, with a high protein content, in the formulation for the yolk-like phase (B), supplies emulsifying properties which make the emulsion present in this phase stable, together with the specific choice of the plant oils used and the use of emulsifying agents. Moreover, the presence of legume or cereal flours and/or other plant protein source, for example in the form of flour, with a high protein content, in the formulation for the yolk-like phase (B), supplies properties of "texture" which make the yolk-like phase (B) as similar as possible to the natural yolk of a hard-boiled egg.

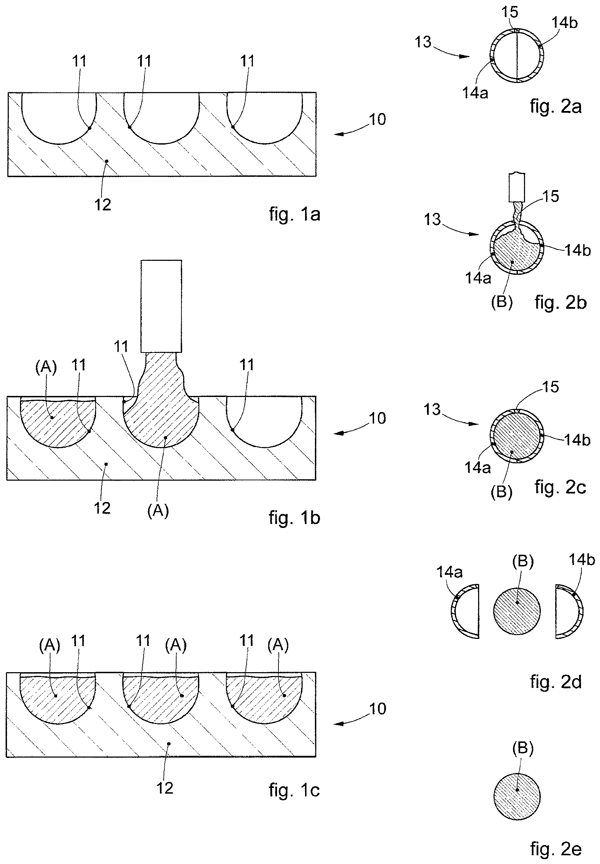

Fig. 1a shows a possible mold 10 for carrying out the step of pouring the melted mixture: it comprises a sequence of cavities 11, which can be semi-circular or semi-oval in shape. For simplicity, fig. 1a indicates only three cavities 11 inside which the melted mixture having the composition of the albumen-like phase (A) is poured.

Fig. 1b shows the pouring of the melted mixture inside the cavities 11 of the mold 10 up to a filling level slightly lower than the surface 12 of the mold 10, as clearly shown in fig. 1c.

Afterward, the temperature of the mold 10 is lowered to a temperature comprised between 25°C and 60°C, preferably between 30°C and 50°C, even more preferably between 35°C and 45°C, so as to obtain a partly melted mixture of the albumen-like phase (A) inside the cavities 11 of the mold 10. These cooling temperatures are advantageous, in particular between 35°C and 45°C, to obtain an optimal compromise between "hardness" - which if excessive would prevent an adequate sinking of the yolk-like phase (B) in the albumen-like phase (A) - and "liquid" behavior, which if excessive would cause the albumen-like phase (A) not to support the yolk-like phase (B) in the correct position. Advantageously, with the operating temperature between 25°C and 60°C, the desired viscosity and consistency of the yolk-like phase (B) and of the albumen-like phase (A) is obtained, so that the yolk-like phase (B) in practice floats in the albumen-like phase (A), without needing to be physically supported by external components during the formation of the final product.

Figs. 2a-2e show the pouring of the yolk-like phase (B) in a mold 13 with two shells 14a, 14b having a spherical shape overall. The mold 13 is equipped with a hole 15 positioned at its upper end, suitable to insert a melted product inside it.

Therefore, the ingredients of the yolk-like phase (B) according to the invention, which comprise for example an oil in water emulsion which can include water, legume or cereal flours, food grade salt containing sulfates and/or sulfides (for example Indian salt Kala Namak), a plant gelling agent, are first mixed together in a mixer in order to obtain a homogeneous mixture, which is then subjected to heating and cooking up to a temperature comprised between 75°C and 95°C, so as to obtain a melted mixture of the yolk-like phase (B).

Fig. 2b shows the pouring of the melted mixture through the hole 15 of the mold 13 with two shells 14a, 14b until the internal space between the shells 14a, 14b of the mold 13 is completely filled, as clearly shown in figs. 2b and 2c.

Then, the temperature of the mold 13 with the poured melted mixture inside is lowered until it reaches a temperature comprised between -18 ° C and +10°C in such a way as to obtain the solidification by cooling of the yolk-like phase (B) inside the mold 13.

Fig. 2d indicates the step of opening and separating the two shells 14a, 14b of the mold 13 to extract a solid compound having a spherical shape and the composition of the yolk-like phase (B), as clearly shown in fig. 2e.

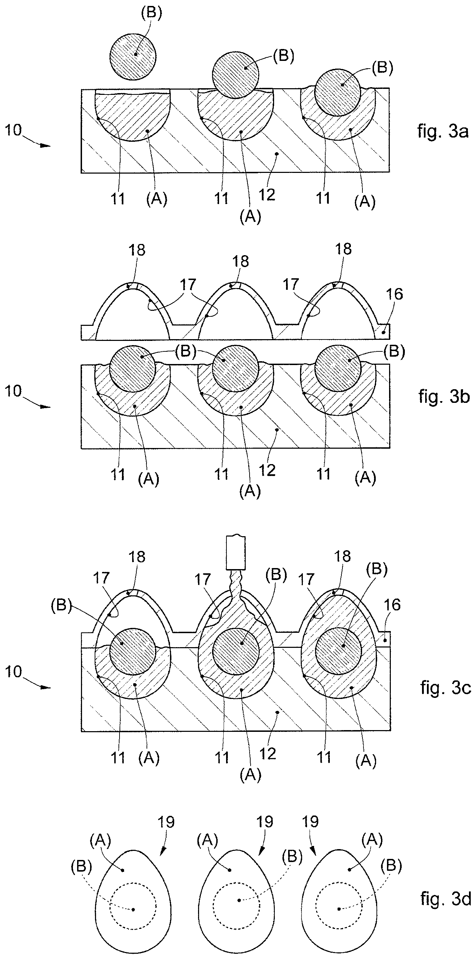

Figs 3a, 3b show the step of inserting the previously prepared solid compounds in correspondence with the central portion of each cavity 11 of the mold 10. As previously reported, the mold 10 is kept at a temperature such that the albumen-like phase (A) inside the cavities 11 is partly melted. This allows the solid compound of the yolk-like composition (B) to remain in a balanced position above the albumen-like phase (A) contained in each cavity 11, and therefore not to sink inside the albumen-like phase (A).

Fig. 3b also shows an upper mold 16 with a sequence of three semi-oval shaped cavities 17, which overlap the cavities 11 of the first mold 10. As indicated in fig. 3c, the molds 16 also have holes 18 positioned at the upper end of each cavity 17.

Fig. 3c shows the further phase of pouring the albumen-like phase (A) through the holes 18 of the upper mold 16 until the semi-oval shaped cavities 17 have been completely filled: this allows to make the upper portion of the food product that replaces the hard-boiled egg.

In this way, the albumen-like phase (A) externally covers the yolk-like phase (B) disposed in a central position, as occurs in a traditional hard-boiled egg. The food products (19), produced using the method and the ingredients described above, are then extracted (fig. 3d) from the superimposition of the two molds 10 and 16, and can therefore be packaged and shipped to the large retail stores.

EXAMPLES

Ingredients:

ALBUMEN-LIKE PHASE (A) example 1:

- 90.5% in weight of water
- 4.5% in weight of powdered soya-based drink
- 2.7% in weight of gelling agent (agar-agar)
- 2.3% in weight of calcium carbonate

ALBUMEN-LIKE PHASE (A) example 2:

- 1% in weight of calcium carbonate
- 1% of carrageenans
- 95% in weight of water
- 3% rice starch

ALBUMEN-LIKE PHASE (A) example 3:

- 5% in weight of calcium carbonate
- 4% of carrageenans
- 86% in weight of water
- 5% rice starch

ALBUMEN-LIKE PHASE (A) example 4:

- 5% in weight of calcium carbonate
- 4% of carrageenans
- 90% in weight of water
- 1% in weight of gelling agent (agar-agar)
- 10% rice starch

ALBUMEN-LIKE PHASE (A)example 5:

- 4% in weight of calcium carbonate
- 3% of carrageenans
- 85% in weight of water
- 2% in weight of gelling agent (agar-agar)
- 1% flavoring agent
- 5% rice starch

ALBUMEN-LIKE PHASE (A) example 6:

- 5% in weight of calcium carbonate
- 4% of carrageenans
- 75% in weight of water
- 4% in weight of gelling agent (agar-agar)
- 2% flavoring agent
- 10% rice starch

ALBUMEN-LIKE PHASE (A) example 7:

- 2.5% in weight of calcium carbonate
- 2.5% of carrageenans
- 85% in weight of water

- 3% in weight of gelling agent (agar-agar)
- 1% flavoring agent
- 6% rice starch

YOLK-LIKE PHASE (B) example 1:

- 47.6% in weight of water
- 28.6% in weight of oil in water emulsion *
- 19.05% in weight of lupin flour
- 3.8% in weight of gelling agent (agar-agar)
- 0.95% in weight of Indian black salt (Kala Namak)

* made using:

- 64.5% in weight of a rice-based drink (58.3% water and 41.7% rice powder)
- 32.3% in weight of sunflower seed oil
- 3.2% in weight of monoglycerides of fatty acids

YOLK-LIKE PHASE (B) example 2:

- 32% in weight of water
- 32% in weight oil in water emulsion (sunflower seed oil, soya-based drink, apple vinegar, brown sugar, lemon juice, extra virgin olive oil, sea salt, mustard, xanthan gum)
- 19% in weight of tomato sauce
- 13% in weight of chickpea flour
- 2% in weight of gelling agent (agar-agar)
- 2% in weight of Indian black salt (Kala Namak)
- <0.5% in weight of "egg-yellow" food dye

YOLK-LIKE PHASE (B) example 3:

- 40% in weight of chickpea flour
- 3% in weight of gelling agent (agar-agar)
- 2% in weight of Indian black salt (Kala Namak)
- 40% in weight of water
- 15% in weight of oil

YOLK-LIKE PHASE (B)example 4:

- 40% in weight of chickpea flour
- 2% in weight of gelling agent (agar-agar)
- 1% in weight of dye
- 2% in weight of Indian black salt (Kala Namak)
- 40% in weight of water
- 15% in weight of oil

YOLK-LIKE PHASE (B) example 5:

- 15% in weight of chickpea flour
- 30% in weight of plant protein source with high protein content
- 2% in weight of gelling agent (agar-agar)
- 1% in weight of Indian black salt (Kala Namak)
- 40% in weight of water
- 12% in weight of oil

YOLK-LIKE PHASE (B) example 6:

- 15% in weight of chickpea flour

- 30% in weight of plant protein source with high protein content
- 3% in weight of gelling agent (agar-agar)
- 1% in weight of dye
- 1% in weight of Indian black salt (Kala Namak)
- 30% in weight of water
- 20% in weight of oil

YOLK-LIKE PHASE (B) example 7:

- 25% in weight of chickpea flour
- 20% in weight of plant protein source with high protein content
- 3% in weight of gelling agent (agar-agar)
- 2% in weight of Indian black salt (Kala Namak)
- 30% in weight of water
- 20% in weight of oil

YOLK-LIKE PHASE (B) example 8:

- 27.5% in weight of chickpea flour
- 15% in weight of plant protein source with high protein content
- 2% in weight of gelling agent (agar-agar)
- 2.5% in weight of Indian black salt (Kala Namak)
- 37.5% in weight of water
- 15.5% in weight of oil

Method:

The two phases were carried out according to the method described here by way of example:

- mixing the different ingredients that make up the yolk-like phase (B) and cooking the mass until it reaches a temperature of about 80°C;
- pouring the melted mixture having the composition of the yolk-like phase (B) in spherical molds to make yolk-like solid compounds (B) and subsequent heat reduction to 2°C;
- mixing the different ingredients that make up the albumen-like phase (A) and cooking the mass until it reaches a temperature of about 90°C;
- pouring, in a lower mold provided with cavities, a melted mixture having the composition of the albumen-like phase (A);
- subsequent cooling of the mold at a temperature of -18°C for 15 minutes, until 40°C is reached, to obtain the albumen-like phase (A) in partly melted form;
- inserting phase B into the central portion of the cavities containing the albumen-like phase (A) in partly melted form;
- further pouring step of the albumen-like phase (A) through the holes of an upper mold to make the upper portion of said hard-boiled egg substitute food product;
- final cooling of the mold to -18°C for about 60 minutes, subsequent removal of the substitute from the mold and storage of the product at 4°C.

EXPERIMENTAL DATA

Colorimetric analysis

Colorimetric analysis was performed using a MINOLTA CR-400 colorimeter based on the CIE L*a*b* chromatic scale, where L* indicates brightness, a* represents green if it assumes negative values and red for positive values, while 0 is neutral (gray), b* represents blue if it assumes negative values and yellow for positive values, while 0 is neutral (gray).
The method for measuring the color provides a preliminary calibration of the instrument; afterward, measurements are made for each sample in 4 different points of the sample, to verify the homogeneity.
The measurements were carried out on both the formulations of the yolk (example 1 and 2) and the albumen of the substitute and the traditional hard-boiled egg.
The data of the analysis are shown in Table 1.

| TABLE 1 | | | L* | a* | b* |
|---|---|---|---|---|---|
| ALBUMEN (hen) [a] | AVERAGE | | 83.86 | -5.50 | 3.24 |
| | dev.st | | 0.35 | 0.32 | 0.15 |
| ALBUMEN-LIKE (substitute) [s] | AVERAGE | | 77.79 | -0.10 | 12.59 |
| | dev.st | | 0.10 | 0.02 | 0.10 |
| | DE*ab | DL* | Da* | Db* |
| | 12.39 | 6.07 | -5.40 | -9.36 |
| YOLK (hen) [a] | AVERAGE | | 84.87 | -1.25 | 44.95 |
| | dev.st | | 0.95 | 0.39 | 0.79 |
| YOLK-LIKE (substitute example 1) [s] | AVERAGE | | 66.77 | 0.34 | 37.37 |
| | dev.st | | 0.45 | 0.31 | 1.24 |
| | DE*ab | DL* | Da* | Db* |
| | 19.69 | 18.10 | -1.59 | 7.58 |
| YOLK-LIKE (substitute example 2) [s] | AVERAGE | | 63.57 | 10.59 | 49.46 |
| | dev.st | | 0.29 | 0.40 | 0.93 |
| | DE*as | DL* | Da* | Db* |
| | 24.78 | 21.30 | -11.84 | -4.51 |

As far as the albumen is concerned, the value of L* is lower for the substitute (albumen-like), so it is less bright; the value of a* is instead greater for the substitute: this implies that the product tends to be more gray; the value of b* is also greater for the substitute: this implies a greater tendency to yellow than the animal product.

As far as the yolk is concerned, in example 2 the value of L* is smaller for the substitute (yolk-like example 2), so it is less bright; the value of a* is instead greater for the substitute: this implies that the product tends to be redder; the value of b* is also greater for the substitute: this implies a greater tendency to yellow than the animal product.

In example 1, instead, the value of L* is lower for the substitute (yolk-like example 1), so it is less bright; the value of a* is slightly higher for the substitute: this implies that the product tends to be redder; the value of b* is lower for the substitute: this implies a lower tendency to yellow compared to the animal product.

The value of ΔE* was calculated to determine the difference between the colors of the two products (substitute and animal egg), using the following formula:

$$\Delta E^* = \sqrt{((\Delta L^*)^2 + (\Delta a^*)^2 + (\Delta b^*)^2)}$$

If the value of ΔE* is <1, no difference is perceived by the human eye; in this case the difference is much higher, both for the albumen and for both formulations of the yolk.

Consistency analysis

The consistency analysis, or compression test, was carried out using an instrument: Series IX Automated Materials Testing System_Instron Corporation Model 4301 - H2169. Based on the consistency of the product and following several preliminary tests, it was decided to use the 5 kN head.

The method used is a compression method, which provides to use a cylindrical tip, 6.2 mm in diameter, with a descent rate of 25 mm/min.

The calibration of the instrument is carried out automatically by the machine itself.

The method to measure consistency provides that for each sample measurements are made in 4 different points thereof, to verify their homogeneity.

Measurements were made on both the formulations of the yolk (example 1 and 2) and the albumen of the substitute and the traditional hard-boiled egg.

Table 2 shows the processed data of the analysis, on which the average and the standard deviation were calculated.

| TABLE 2 | | |
|---|---|---|
| | | kN |
| ALBUMEN (hen) [a] | AVERAGE | 1.63 |
| | stan. dev. | 0.01 |
| ALBUMEN-LIKE (substitute) [s] | AVERAGE | 2.19 |
| | stan. dev. | 0.26 |
| YOLK (hen) [a] | AVERAGE | 2.95 |
| | stan. dev. | 0.02 |
| YOLK-LIKE (substitute example 1) [s] | AVERAGE | 1.26 |
| | stan. dev. | 0.01 |
| YOLK-LIKE (substitute example 2) [s] | AVERAGE | 1.10 |
| | stan. dev. | 0.02 |

From the data shown in the table it should be noted that for the albumen substitute (albumen-like), the force required to penetrate the product is higher than that necessary for the penetration of the albumen of the animal egg.

On the contrary, for both formulations of the yolk substitute (yolk-like example 1 and yolk-like example 2), the force required to penetrate the product is lower than that necessary for the penetration of the egg yolk of animal origin.

Although the above description concerns embodiments of the invention, other embodiments can be provided without departing for this reason from its main field of protection, and its field of protection is defined by the following claims.

**Claims**

1.   Food product to substitute a hard-boiled egg, said food product consisting of the following phases:

an albumen-like phase (A) comprising:

- a powdered component chosen from a powdered soya-based drink, a powdered oats-based drink, a powdered rice-based drink;
- water;
- a plant gelling agent;
- calcium carbonate;

a yolk-like phase (B) comprising:

- from 10% to 50% in weight of an oil in water emulsion;
- from 20% to 80% in weight of water;
- from 5% to 50% in weight of a legume flour or cereal flour;
- from 1.0% to 10% in weight of a food grade salt containing sulfates and/or sulfides;
- from 0.1% to 10% in weight of a plant gelling agent;

wherein said yolk-like phase occupies the central portion of said food product, while said albumen-like phase constitutes the external covering of said food product.

2.   Food product as in claim 1, **characterized in that** said plant gelling agent used in said albumen-like phase (A) and said yolk-like phase (B) is chosen from one of the following plant substances:

- rice starch, maize starch, tapioca starch, wheat starch, arrowroot, potato flour;

- guar gum, xanthan gum, tara gum, konjac gum;
- agar-agar, pectin, soy lecithin.

3. Food product as in any claim hereinbefore, **characterized in that** said oil in water emulsion comprises water, one or more vegetable oils and possibly plant flour.

4. Food product as in any claim hereinbefore, **characterized in that,** if legume flour is used in the yolk-like phase (B), this is chosen from lupin flour, chickpea flour, bean flour, lentil flour or mixes thereof.

5. Food product as in any claim hereinbefore, **characterized in that** said food grade salt containing sulfates and/or sulfides is Indian Kala Namak salt.

6. Food product as in any claim hereinbefore, **characterized in that** said albumen-like phase (A) comprises powdered soya-based drink and the weight ratio between the powdered soya-based drink and water is comprised between 1:1.5 and 1:100.

7. Food product as in any claim hereinbefore, **characterized in that** said albumen-like phase (A) comprises agar-agar in a weight quantity between 0.1% and 10% and calcium carbonate in a weight quantity comprised between 0.1 % and 10%.

8. Food product as in any claim hereinbefore, **characterized in that** said yolk-like phase (B) further comprises from 0% to 40% in weight of tomato and/or a "yellow" food dye, in particular present from 0% to 1% in weight in the yolk-like phase (B).

9. Food product to substitute a hard-boiled egg, said food product consisting of the following steps:

   an albumen-like phase (A) comprising:

   - a powdered component chosen from a powdered soya-based drink, a powdered oats-based drink, a drink based on powdered rice and/or powdered vegetable starch, in particular cereal starch such as rice starch or potato starch;
   - water;
   - a plant gelling agent;
   - calcium carbonate;

   a yolk-like phase (B) comprising:

   - water;
   - vegetable oil;
   - plant protein source, in flour or powder, with a high protein content;
   - food grade salt containing sulfates and/or sulfides;
   - plant gelling agent.

10. Method to prepare a food product to substitute a hard-boiled egg as in any of the claims 1-8, said method comprising:

   - pouring a melted mixture having a composition of a yolk-like phase (B) into spherical shaped molds (13) in order to obtain yolk-like solid compounds, and subsequent reduction in temperature, until the whole mass is completely cooled and solidified;
   - pouring a further melted mixture having a composition of an albumen-like phase (A) into a mold (10) having cavities (11);
   - subsequently cooling said mold (10) into which the composition of the albumen-like phase (A) has been poured to a temperature comprised between 25°C and 60°C, preferably between 30°C and 50°C, even more preferably between 35°C and 45°C, in order to obtain said albumen-like phase (A) in a partly melted form;
   - inserting said cooled and solidified yolk-like phase (B) into the central portion of said cavities (11) containing said albumen-like phase (A) in a partly melted form;
   - further step of pouring said albumen-like phase (A) through the holes (18) of a further mold (16) in order to obtain the upper portion of said food product to substitute a hard-boiled egg, so that the yolk-like phase (B) occupies the central portion of said food product, while the albumen-like phase (A) constitutes the external

17

covering of the food product;

wherein the albumen-like phase (A) comprises:

- a powdered component chosen between a powdered soya-based drink, a powdered oats-based drink, a drink based on powdered rice;
- water;
- a plant gelling agent;
- calcium carbonate;

wherein the yolk-like phase (B) comprises:

- from 10% to 50% in weight of an oil in water emulsion;
- from 20% to 80% in weight of water;
- from 5% to 50% in weight of a legume flour or cereal flour;
- from 1.0% to 10% in weight of a food grade salt containing sulfates and/or sulfides;
- from 0.1% to 10% in weight of a plant gelling agent.

11. Method as in claim 10, wherein both the albumen-like phase (A) and the yolk-like phase (B), before the respective pouring steps, are obtained by mixing the respective components and subjecting the mixes thus obtained to cooking, in order to obtain the corresponding melted mixtures.

12. Method as in claim 10 or 11, wherein the temperature of said molds (13) is lowered to a cooling temperature comprised between -18°C and +10°C to obtain the solidification of said yolk-like phase (B) inside said molds (13).

13. Method as in claim 10, 11 or 12, wherein said other mold (16) has a sequence of cavities (17), semi-oval shaped, so as to overlap the cavities (11) of said first mold (10).

14. Method to prepare a food product to substitute a hard-boiled egg as in claim 9, said method comprising:

- pouring a melted mixture having a composition of a yolk-like phase (B) into spherical shaped molds (13) in order to obtain yolk-like solid compounds, and subsequent reduction in temperature, until the whole mass is completely cooled and solidified;
- pouring a further melted mixture having a composition of an albumen-like phase (A) into a mold (10) having cavities (11);
- subsequently cooling said mold (10) into which the composition of the albumen-like phase (A) has been poured to a temperature comprised between 25°C and 60°C, preferably between 30°C and 50°C, even more preferably between 35°C and 45°C, in order to obtain said albumen-like phase (A) in a partly melted form;
- inserting said cooled and solidified yolk-like phase (B) into the central portion of said cavities (11) containing said albumen-like phase (A) in a partly melted form;
- further step of pouring said albumen-like phase (A) through the holes (18) of a further mold (16) in order to obtain the upper portion of said food product to substitute a hard-boiled egg, so that the yolk-like phase (B) occupies the central portion of said food product, while the albumen-like phase (A) constitutes the external covering of the food product;

wherein the albumen-like phase (A) comprises:

- a powdered component chosen between a powdered soya-based drink, a powdered oats-based drink, a drink based on powdered rice and/or powdered vegetable starch, in particular cereal starch such as rice starch or potato starch;
- water;
- a plant gelling agent;
- calcium carbonate;

wherein the yolk-like phase (B) comprises:

- water;
- vegetable oil;

- plant protein source, in flour or powder, with a high protein content;
- food grade salt containing sulfates and/or sulfides;
- plant gelling agent.

**Patentansprüche**

1. Nahrungsmittelprodukt, welches ein hartgekochtes Ei substituieren soll, wobei besagtes Nahrungsmittelprodukt aus den folgenden Phasen besteht:

   eine Eiweiß-artige Phase (A) aufweisend:

   - eine Pulverkomponente ausgewählt aus einem Soja-basierten Getränkepulver, einem Hafer-basierten Getränkepulver, einem Reis-basierten Getränkepulver,
   - Wasser,
   - ein Pflanzengeliermittel,
   - Calciumcarbonat,

   eine Eigelb-artige Phase (B) aufweisend:

   - von 10 Gew.-% bis 50 Gew.-% einer Öl-in-Wasser-Emulsion,
   - von 20 Gew.-% bis 80 Gew.-% Wasser,
   - von 5 Gew.-% bis 50 Gew.-% eines Hülsenfrüchtemehls oder Getreidemehls,
   - von 1,0 Gew.-% bis 10 Gew.-% eines Speisesalzes, welches Sulfate und/oder Sulfide enthält,
   - von 0,1 Gew.-% bis 10 Gew.-% eines Pflanzengeliermittels,

   wobei besagte Eigelb-artige Phase den zentralen Abschnitt von besagtem Nahrungsmittelprodukt einnimmt, während besagte Eiweiß-artige Phase die äußere Hülle des besagten Nahrungsmittelprodukts ausmacht.

2. Nahrungsmittelprodukt gemäß Anspruch 1, **dadurch gekennzeichnet, dass** besagtes Pflanzengeliermittel, welches in besagter Eiweiß-artiger Phase (A) und besagter Eigelb-artiger Phase (B) verwendet wird, ausgewählt ist aus einer der folgenden Pflanzensubstanzen:

   - Reisstärke, Maisstärke, Tapiokastärke, Weizenstärke, Pfeilwurz, Kartoffelmehl,
   - Guaran, Xanthan, Taragummi, Konjakgummi,
   - Agar-Agar, Pektin, Sojalecithin.

3. Nahrungsmittelprodukt gemäß irgendeinem der vorangegangenen Ansprüche, **dadurch gekennzeichnet, dass** besagte Öl-in-Wasser-Emulsion aufweist Wasser, eines oder mehrere Pflanzenöle und gegebenenfalls Pflanzenmehl.

4. Nahrungsmittelprodukt gemäß irgendeinem der vorangegangenen Ansprüche, **dadurch gekennzeichnet, dass**, wenn Hülsenfrüchtemehl in der Eigelb-artigen Phase (B) verwendet wird, dieses ausgewählt ist aus Lupinenmehl, Kichererbsenmehl, Bohnenmehl, Linsenmehl oder Mischungen davon.

5. Nahrungsmittelprodukt gemäß irgendeinem der vorangegangenen Ansprüche, **dadurch gekennzeichnet, dass** besagtes Sulfate und/oder Sulfide aufweisendes Speisesalz indisches Kala Namak Salz ist.

6. Nahrungsmittelprodukt gemäß irgendeinem der vorangegangenen Ansprüche, **dadurch gekennzeichnet, dass** besagte Eiweiß-artige Phase (A) Soja-basiertes Getränkepulver aufweist und das Gewichtsverhältnis zwischen dem Soja-basierten Getränkepulver und Wasser zwischen 1:1,5 und 1:100 liegt.

7. Nahrungsmittelprodukt gemäß irgendeinem der vorangegangenen Ansprüche, **dadurch gekennzeichnet, dass** besagte Eiweiß-artige Phase (A) aufweist Agar-Agar in einer Gewichtsmenge zwischen 0,1% und 10% und Calciumcarbonat in einer Gewichtsmenge zwischen 0,1% und 10%.

8. Nahrungsmittelprodukt gemäß irgendeinem der vorangegangenen Ansprüche, **dadurch gekennzeichnet, dass** besagte Eigelb-artige Phase (B) weiterhin aufweist 0 Gew.-% bis 40 Gew.-% Tomate und/oder einen "gelben" Lebensmittelfarbstoff, insbesondere vorliegend von 0 Gew.-% bis 1 Gew.-% in der Eigelb-artigen Phase (B).

9. Nahrungsmittelprodukt, welches ein hartgekochtes Ei substituieren soll, wobei besagtes Nahrungsmittelprodukt aus den folgenden Schritten besteht:

einer Eiweiß-artigen Phase (A) aufweisend:

- eine pulverförmige Komponente ausgewählt aus einem Soja-basierten Getränkepulver, einem Hafer-basierten Getränkepulver, einem Getränk basierend auf pulverförmigem Reis und/oder pulverförmiger Gemüsestärke, insbesondere Getreidestärke wie z.B. Reisstärke oder Kartoffelstärke,
- Wasser,
- ein Pflanzengeliermittel,
- Calciumcarbonat,

einer Eigelb-artigen Phase (B) aufweisend:

- Wasser,
- Gemüseöl,
- Pflanzenproteinquelle, als Mehl oder Pulver, mit einem hohen Proteingehalt,
- Speisesalz, welches Sulfate und/oder Sulfide enthält,
- Pflanzengeliermittel.

10. Verfahren zum Herstellen eines Nahrungsmittelprodukts, welches ein hartgekochtes Ei substituieren soll, gemäß irgendeinem der Ansprüche 1 bis 8, wobei besagtes Verfahren aufweist:

- Gießen, einer geschmolzenen Mischung mit einer Zusammensetzung einer Eigelb-artigen Phase (B) in kugelförmige Formen (13), um Eigelb-artige, feste Verbindungen zu erlangen, und anschließendes Verringern einer Temperatur, bis die ganze Masse komplett abgekühlt und verfestigt ist,
- Gießen einer weiteren geschmolzenen Mischung mit einer Zusammensetzung einer Eiweiß-artigen Phase (A) in eine Form (10) mit Kavitäten (11),
- anschließendes Kühlen von besagter Form (10), in welche die Zusammensetzung der Eiweiß-artigen Phase (A) gegossen wurde, auf eine Temperatur zwischen 25°C und 60°C, vorzugsweise zwischen 30°C und 50°C, noch bevorzugter zwischen 35°C und 45°C, um besagte Eiweiß-artige Phase (A) in einer teilweise geschmolzenen Form zu erlangen,
- Einfügen von besagter abgekühlter und verfestigter Eigelb-artiger Phase (B) in den zentralen Abschnitt von besagten Kavitäten (11), welche besagte Eiweiß-artige Phase (A) in einer teilweise geschmolzenen Form enthalten,
- einen weiteren Schritt des Gießens von besagter Eiweiß-artiger Phase (A) durch die Löcher (18) einer weiteren Form (16), um den oberen Abschnitt zu erlangen von besagtem Nahrungsmittelprodukt, welches ein hartgekochtes Ei substituieren soll, sodass die Eigelb-artige Phase (B) den zentralen Abschnitt von besagtem Nahrungsmittelprodukt einnimmt, während die Eiweiß-artige Phase (A) die äußere Hülle des Nahrungsmittelprodukts ausmacht,

wobei die Eiweiß-artige Phase (A) aufweist:

- eine Pulverkomponente ausgewählt aus einem Soja-basierten Getränkepulver, einem Hafer-basierten Getränkepulver, einem Getränk basierend auf pulverförmigem Reis,
- Wasser,
- ein Pflanzengeliermittel,
- Calciumcarbonat,

wobei die Eigelb-artige Phase (B) aufweist:

- von 10 Gew.-% bis 50 Gew.-% einer Öl-in-Wasser-Emulsion,
- von 20 Gew.-% bis 80 Gew.-% Wasser
- von 5 Gew.-% bis 50 Gew.-% eines Hülsenfrüchtemehls oder Getreidemehls,
- von 1,0 Gew.-% bis 10 Gew.-% eines Speisesalzes, welches Sulfate und/oder Sulfide enthält,
- von 0,1 Gew.-% bis 10 Gew.-% eines Pflanzengeliermittels.

**11.** Verfahren gemäß Anspruch 10, wobei sowohl die Eiweiß-artige Phase (A) als auch die Eigelb-artige Phase (B), vor den jeweiligen Gieß-Schritten, erlangt werden mittels Mischens der jeweiligen Komponenten und Kochens dieser dadurch erlangten Mischungen, um die entsprechenden geschmolzenen Mischungen zu erlangen.

**12.** Verfahren gemäß Anspruch 10 oder 11, wobei die Temperatur von besagten Formen (13) auf eine Kühltemperatur zwischen -18°C und +10°C verringert wird, um die Verfestigung von besagter Eigelb-artiger Phase (B) in besagten Formen (13) zu erreichen.

**13.** Verfahren gemäß Anspruch 10, 11 oder 12, wobei besagte andere Form (16) eine Folge von halb-oval geformten Kavitäten (17) hat, um die Kavitäten (11) von besagter erster Form (10) zu überlappen.

**14.** Verfahren zum Herstellen eines Nahrungsmittelprodukts, welches ein hartgekochtes Ei substituieren soll, gemäß Anspruch 9, wobei besagtes Verfahren aufweist:

 - Gießen einer geschmolzenen Mischung mit einer Zusammensetzung einer Eigelb-artigen Phase (B) in kugelförmige Formen (13), um Eigelb-artige feste Verbindungen zu erlangen, und anschließendes Verringern einer Temperatur, bis die ganze Masse komplett abgekühlt und verfestigt ist,
 - Gießen einer weiteren geschmolzenen Mischung mit einer Zusammensetzung einer Eiweiß-artigen Phase (A) in eine Form (10) mit Kavitäten (11),
 - anschließendes Kühlen von besagter Form (10), in welche die Zusammensetzung der Eiweiß-artigen Phase (A) gegossen wurde, auf eine Temperatur zwischen 25°C und 60°C, vorzugsweise zwischen 30°C und 50°C, noch bevorzugter zwischen 35°C und 45°C, um besagte Eiweiß-artige Phase (A) in teilweise geschmolzener Form zu erlangen,
 - Einfügen von besagter abgekühlter und verfestigter Eigelb-artiger Phase (B) in den zentralen Abschnitt von besagten Kavitäten (11), welche besagte Eiweiß-artige Phase (A) in einer teilweise geschmolzenen Form enthält,
 - einen weiteren Schritt des Gießens von besagter Eiweiß-artiger Phase (A) durch die Löcher (18) einer weiteren Form (16), um den oberen Abschnitt zu erlangen von besagtem Nahrungsmittelprodukt, welches ein hartgekochtes Ei substituieren soll, sodass die Eigelb-artige Phase (B) den zentralen Abschnitt von besagtem Nahrungsmittelprodukt einnimmt, während die Eiweiß-artige Phase (A) die äußere Hülle des Nahrungsmittelprodukts ausmacht,

wobei die Eiweiß-artige Phase (A) aufweist:

 - eine Pulverkomponente ausgewählt aus einem Soja-basierten Getränkepulver, einem Hafer-basierten Getränkepulver, einem Getränk, das auf pulverförmigem Reis und/oder pulverförmiger Gemüsestärke basiert, insbesondere Getreidestärke, wie z.B. Reisstärke oder Kartoffelstärke,
 - Wasser,
 - ein Pflanzengeliermittel,
 - Calciumcarbonat,

wobei die Eigelb-artige Phase (B) aufweist:

 - Wasser
 - Gemüseöl
 - Pflanzenproteinquelle, als Mehl oder Pulver, mit einem hohen Proteingehalt,
 - Speisesalz, welches Sulfate und/oder Sulfide enthält,
 - Pflanzengeliermittel.

## Revendications

**1.** Produit alimentaire destiné à remplacer un œuf dur, ledit produit alimentaire comprenant les phases suivantes :

une phase analogue à de l'albumine (A) comprenant :

 - un composant en poudre choisi parmi une boisson à base de soja en poudre, une boisson à base d'avoine en poudre, une boisson à base de riz en poudre ;

- de l'eau ;
- un agent gélifiant végétal ;
- du carbonate de calcium ;

une phase analogue à du jaune d'œuf (B) comprenant :

- de 10 % à 50 % en poids d'une émulsion huile dans eau ;
- de 20 % à 80 % en poids d'eau ;
- de 5 % à 50 % en poids d'une farine de légume ou d'une farine de céréale ;
- de 1,0 % à 10 % en poids d'un sel de qualité alimentaire contenant des sulfates et/ou des sulfures ;
- de 0,1 % à 10 % en poids d'un gélifiant végétal ;

dans lequel ladite phase analogue à du jaune d'œuf occupe la partie centrale dudit produit alimentaire, tandis que ladite phase analogue à de l'albumine constitue le revêtement externe dudit produit alimentaire.

2. Produit alimentaire selon la revendication 1, **caractérisé en ce que** ledit agent gélifiant végétal utilisé dans ladite phase analogue à de l'albumine (A) et ladite phase analogue à du jaune d'œuf (B) est choisi parmi l'une des substances végétales suivantes :

- amidon de riz, amidon de maïs, amidon de tapioca, amidon de blé, marante, farine de pomme de terre ;
- gomme de guar, gomme de xanthane, gomme de tara, gomme de konjac ;
- gélose, pectine, lécithine de soja.

3. Produit alimentaire selon l'une quelconque des revendications précédentes, **caractérisé en ce que** ladite émulsion huile dans eau comprend de l'eau, une ou plusieurs huiles végétales et facultativement de la farine végétale.

4. Produit alimentaire selon l'une quelconque des revendications précédentes, **caractérisé en ce que**, si de la farine de légume est utilisée dans la phase analogue à du jaune d'œuf (B), celle-ci est choisie parmi la farine de lupin, la farine de pois chiche, la farine de haricot, la farine de lentilles ou des mélanges de celles-ci.

5. Produit alimentaire selon l'une quelconque des revendications précédentes, **caractérisé en ce que** ledit sel de qualité alimentaire contenant des sulfates et/ou des sulfides est un sel Kala Namak indien.

6. Produit alimentaire selon l'une quelconque des revendications précédentes, **caractérisé en ce que** ladite phase analogue à de l'albumine (A) comprend une boisson à base de soja en poudre et le rapport pondéral entre la boisson à base de soja en poudre et l'eau est compris entre 1:1,5 et 1:100.

7. Produit alimentaire selon l'une quelconque des revendications précédentes, **caractérisé en ce que** ladite phase analogue à de l'albumine (A) comprend de l'agar-agar en une quantité en poids comprise entre 0,1 % et 10 % et du carbonate de calcium en une quantité en poids comprise entre 0,1 % et 10 %.

8. Produit alimentaire selon l'une quelconque des revendications précédentes, **caractérisé en ce que** ladite phase analogue à du jaune d'œuf (B) comprend en outre de 0 % à 40 % en poids de tomate et/ou d'un colorant alimentaire «jaune », en particulier présent pour 0 % à 1 % en poids dans la phase analogue à du jaune d'œuf (B).

9. Produit alimentaire destiné à remplacer un œuf dur, ledit produit alimentaire comprenant les étapes suivantes :

une phase analogue à de l'albumine (A) comprenant :

- un composant en poudre choisi parmi une boisson à base de soja en poudre, une boisson à base d'avoine en poudre, une boisson à base de riz en poudre et/ou d'amidon végétal en poudre, en particulier de l'amidon de céréale tel que l'amidon de riz ou de l'amidon de pomme de terre ;
- de l'eau ;
- un agent gélifiant végétal ;
- du carbonate de calcium ;

une phase analogue à du jaune d'œuf (B) comprenant :

- de l'eau ;
- de l'huile végétale ;
- une source de protéines végétales, en farine ou en poudre, avec une haute teneur en protéines ;
- un sel de qualité alimentaire contenant des sulfates et/ou des sulfides ;
- un agent gélifiant végétal.

10. Procédé de préparation d'un produit alimentaire destiné à remplacer un œuf dur selon l'une quelconque des revendications 1 à 8, ledit procédé comprenant les étapes consistant à :

- verser un mélange fondu ayant une composition d'une phase analogue à du jaune d'œuf (B) dans des moules de forme sphérique (13) afin d'obtenir des composés solides analogues à du jaune d'œuf, puis réduire la température, jusqu'à ce que la masse totale soit complètement refroidie et solidifiée ;
- verser un mélange fondu supplémentaire ayant une composition d'une phase analogue à de l'albumine (A) dans un moule (10) ayant des cavités (11) ;
- refroidir ensuite ledit moule (10) dans lequel la composition de la phase analogue à de l'albumine (A) a été versée à une température comprise entre 25°C et 60°C, de préférence entre 30°C et 50°C, de manière encore plus préférée entre 35°C et 45°C, afin d'obtenir ladite phase analogue à de l'albumine (A) sous une forme partiellement fondue ;
- insérer ladite phase analogue à du jaune d'œuf refroidie et solidifiée (B) dans la partie centrale desdites cavités (11) contenant ladite phase analogue à de l'albumine (A) sous une forme partiellement fondue ;
- une étape supplémentaire consistant à verser ladite phase analogue à de l'albumine (A) à travers les trous (18) d'un moule supplémentaire (16) afin d'obtenir la partie supérieure dudit produit alimentaire pour remplacer un œuf dur, de sorte que la phase analogue à du jaune d'œuf (B) occupe la partie centrale dudit produit alimentaire, tandis que la phase analogue à de l'albumine (A) constitue le revêtement externe du produit alimentaire ;

dans lequel la phase analogue à de l'albumine (A) comprend :

- un composant en poudre choisi parmi une boisson à base de soja en poudre, une boisson à base d'avoine en poudre, une boisson à base de riz en poudre ;
- de l'eau ;
- un gélifiant végétal ;
- du carbonate de calcium ;

dans lequel la phase analogue à du jaune d'oeuf (B) comprend :

- de 10 % à 50 % en poids d'une émulsion huile dans eau ;
- de 20 % à 80 % en poids d'eau ;
- de 5 % à 50 % en poids d'une farine de légume ou d'une farine de céréale ;
- de 1,0 % à 10 % en poids d'un sel de qualité alimentaire contenant des sulfates et/ou des sulfides ;
- de 0,1 % à 10 % en poids d'un agent gélifiant végétal.

11. Procédé selon la revendication 10, dans lequel la phase analogue à de l'albumine (A) et la phase analogue à du jaune d'œuf (B), avant les étapes de versement respectives, sont obtenues en mélangeant les composants respectifs et en soumettant les mélanges ainsi obtenus à une cuisson, afin d'obtenir les mélanges fondus correspondants.

12. Procédé selon la revendication 10 ou 11, dans lequel la température desdits moules (13) est abaissée à une température de refroidissement comprise entre -18°C et +10°C pour obtenir la solidification de ladite phase analogue à du jaune d'œuf (B) à l'intérieur desdits moules (13).

13. Procédé selon la revendication 10, 11 ou 12, dans lequel ledit autre moule (16) a une séquence de cavités (17), de forme semi-ovale, de manière à chevaucher les cavités (11) dudit premier moule (10).

14. Procédé de préparation d'un produit alimentaire destiné à remplacer un œuf dur selon la revendication 9, ledit procédé comprenant les étapes consistant à :

- verser un mélange fondu ayant une composition d'une phase analogue à du jaune d'œuf (B) dans des moules de forme sphérique (13) afin d'obtenir des composés solides analogues à du jaune d'œuf, puis réduire la température, jusqu'à ce que la masse totale soit complètement refroidie et solidifiée ;

- verser un mélange fondu supplémentaire ayant une composition d'une phase analogue à de l'albumine (A) dans un moule (10) ayant des cavités (11) ;

- refroidir ensuite ledit moule (10) dans lequel la composition de la phase analogue à de l'albumine (A) a été versée à une température comprise entre 25°C et 60°C, de préférence entre 30°C et 50°C, de manière encore plus préférée entre 35°C et 45°C, afin d'obtenir ladite phase analogue à l'albumine (A) sous une forme partiellement fondue ;

- insérer ladite phase analogue à du jaune d'œuf refroidie et solidifiée (B) dans la partie centrale desdites cavités (11) contenant ladite phase analogue à de l'albumine (A) sous une forme partiellement fondue ;

- une étape supplémentaire consistant à verser ladite phase analogue à de l'albumine (A) à travers les trous (18) d'un moule supplémentaire (16) afin d'obtenir la partie supérieure dudit produit alimentaire pour remplacer un œuf dur, de sorte que la phase analogue à du jaune d'œuf (B) occupe la partie centrale dudit produit alimentaire, tandis que la phase analogue à de l'albumine (A) constitue le revêtement externe du produit alimentaire ;

dans lequel la phase analogue à l'albumine (A) comprend :

- un composant en poudre choisi parmi une boisson à base de soja en poudre, une boisson à base d'avoine en poudre, une boisson à base de riz en poudre et/ou d'amidon végétal en poudre, en particulier de l'amidon de céréale tel que de l'amidon de riz ou l'amidon de pomme de terre ;
- de l'eau ;
- un agent gélifiant végétal ;
- du carbonate de calcium ;

dans lequel la phase analogue à du jaune d'oeuf (B) comprend :

- de l'eau ;
- de l'huile végétale ;
- une source de protéines végétales, en farine ou en poudre, avec une haute teneur en protéines ;
- un sel de qualité alimentaire contenant des sulfates et/ou des sulfites ;
- un agent gélifiant végétal.

15

13

14b

14a

fig. 2a

11   11   11

10

12

fig. 1a

15

13

14b

14a

(B)   fig. 2b

11

(A)   11   11

10

12   (A)

fig. 1b

15

13

14b

14a

(B)   fig. 2c

14a   (B)   14b

fig. 2d

(A)   11   11   11   (A)

10

12   fig. 1c

(B)

fig. 2e

fig. 3a

fig. 3b

fig. 3c

fig. 3d

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3640732 A
- US 20130084361 A
- US 2013084361 A
- US 3791285 A

**Non-patent literature cited in the description**

- *The Ultimate Vegan Eggs [Vegan, Gluten-Free,* 2015
- *Proper Vegan Hard-Boiled Eggs,* 2014